# EUROPEAN PATENT APPLICATION

(11) **EP 4 703 699 A1**
(43) Date of publication of application: **04.03.2026**
(21) Application number: 24197178.7
(22) Date of filing: 29.08.2024
(51) Int. Cl.: G01M 3/00, G01M 3/32, H01M 10/42

(54) **METHOD AND DEVICE FOR LEAK TESTING AT LEAST A PART OF A BATTERY HOUSING**

(71) Applicant: Nemak, S.A.B. de C.V., 66017 García, Nuevo León (MX)
(72) Inventor: MARSCH, Stefan, 51491 Overath (DE); WICKERT, Christopher, 65934 Frankfurt am Main (DE)
(74) Representative: Cohausz & Florack

(57) **Abstract**

The invention relates to a method for leak testing at least one part of a battery housing (4), comprising the steps of: measuring the temperature T₁ of the at least one part of the battery housing (4), optionally air-cooling the at least one part of the battery housing (4), introducing the at least one part of the battery housing (4) into a climatized cabin (6) filled with a fluid (12) at a certain pressure p_{c}, and leak testing the at least one part of the battery housing (4) based on pressurizing the at least one part of the battery housing (4) with a fluid at a certain pressure p_{b} and measuring the pressure change Δp_{b}, preferentially during a defined testing period Δt. The invention also relates to a device (2) for leak testing at least one part of a battery housing (4), comprising: a first temperature sensor (14) for sensing the temperature T₁ of the at least one part of the battery housing (4), a climatized cabin (6) filled with a fluid (12) at a certain pressure p_{c}, a fluid compressing unit (26a, 26b) for filling the at least one part of the battery housing (4) with a fluid at a certain pressure p_{b}, and a pressure sensor (32) for sensing the fluid pressure p_{b} of the at least one part of the battery housing (4).

## Description

The present invention relates to a method for leak testing at least a part of a battery housing and to a device for leak testing at least a part of a battery housing.

Methods for leak testing manufactured parts, for instance, automobile engine blocks or other automobile parts that are expected to have no or low leakage are crucial to ensure the manufactured parts integrity and to make sure the manufactured part fulfills the respective sealing requirements.

For leak testing, leak testing systems are often employed by the manufacturer in the production plant. A variety of leak tests is known. Some leak testing methods, for example, rely on a basic gauge pressure decay leak test in which a part to be tested is pressurized and then tested for leakage. Other tests include leakage tests based on differential pressure decay between a reference part and a part to be tested. Generally, pressurization of the part to be tested is performed by filling the part, in particular a cavity of the part which is supposed to be leak-tight, with a fluid, such as a gas.

In a basic gauge pressure decay leak test, when the part to be tested is pressurized, measurement errors may occur due to the change in pressure causing an adiabatic effect. When the part is pressurized, the gas heats up, but the gas is then cooled by thermal conduction to the tested part. But because the pressure of gas is also dependent on its temperature, the pressure decreases even though the tested part has been sealed. This decrease in pressure is further dependent on the temperature of the tested part.

As a consequence of the measured pressure being strongly dependent on the temperature during leak testing, a temperature increase during measuring bears the risk of not recognizing faulty parts, i.e. those parts that are not leak-tight enough. On the other hand, a temperature decrease during measuring bears the risk of classifying parts as faulty that are actually leak-tight enough (so-called pseudo scrap).

Further factors which might falsify the results of a leak test of a manufactured part are a potentially humid gas used for pressurizing the tested part and/or humidity of the ambient air. Moreover, contamination or dirt at or on the manufactured part to be tested might have an effect on the test leak test results.

One example of manufactured parts whose (leak) tightness is of particular importance, are battery housings. A battery housing must be sealed and waterproof to prevent short circuit caused by water ingress. Further reasons why ensuring that battery housings are leak-tight is crucial are durability and performance reasons. Thus, the sealing directly affects the working safety of the battery system so that leak testing of a manufactured battery housing is essential before a manufactured battery housing is delivered and further used, for instance, installed in an (electric or hybrid) vehicle.

Moreover, since battery housings are usually several square meters in size or have several square meters of surface area, which is associated with a large test volume, even small temperature influences can have a major impact on the test results during the leak test of a battery housing.

Therefore, the present invention is faced with the problem of providing an improved method and device for leak testing a battery housing and in particular reducing the temperature influences on the measurement results during a leak test.

According to a first aspect of the present invention, said problem is solved by a method for leak testing at least one part of a battery housing, comprising the steps of: measuring the temperature T₁ of the at least one part of the battery housing, optionally air-cooling the at least one part of the battery housing, introducing the at least one part of the battery housing into a climatized cabin filled with a fluid at a certain pressure p_{c}, and leak testing the at least one part of the battery housing based on pressurizing the at least one part of the battery housing with a fluid at a certain pressure p_{b} and measuring the pressure change Δp_{b}, preferentially during or over a defined testing period Δt.

This way, the leak testing can be carried out in climate- and atmosphere-controlled conditions so that influences of the surroundings and temperature differences of the fluid during the defined testing period can be minimized. This leads to more accurate and reliable test results.

Optionally, the at least one part of the battery housing is (air)-cooled. The air-cooling of the at least one part of the battery housing may for example depend on the measured temperature T₁ of the at least one part of the battery housing. In particular, in this case, measuring the temperature T₁ of the at least one part of the battery housing takes place before air-cooling the at least one part of the battery housing. Preferentially, if air-cooling is employed, the at least one part of the battery housing is air-cooled to a temperature of about 25 °C. The at least one part of the battery housing can be, for instance, at a temperature of about 35 °C before optionally (air-)cooling takes place. This temperature may for example be caused by the manufacturing process of the battery housing.

The fluid with which the at least one part of the battery housing is pressurized may be the fluid with which the climatized cabin is filled or a different fluid, e.g. a fluid stored within the climatized cabin and specifically foreseen for the purpose of pressurizing the at least one part of the battery housing.

In particular, the fluid is a gas, more particularly test air. If test air is used as the fluid, quality class 1 test air is preferentially used, whereby quality class 1 test air refers to a standard of compressed air quality as defined by the ISO 8573-1 standard, which specifies the purity classes of compressed air in terms of particulate matter, water content, and oil content. Quality class 1 air is characterized, in particular, by the fact that the air is extremely dry, with minimal water vapor content, and extremely clean. Moreover, preferentially, the fluid, in particular the gas and more particularly the test air, is kept at a defined constant temperature.

The climatized cabin may refer to an enclosed space that is equipped with systems to control and maintain a specific and stable climate. This may include the regulation of temperature, humidity, and air quality to ensure stable conditions in the cabin. For this purpose, the climatized cabin may include, in particular, temperature control, for instance heating and cooling systems to maintain a specific temperature, regardless of external conditions; humidity control, for instance systems to regulate the moisture level of the fluid, in particular air, within the cabin, preventing it from becoming too dry or too humid; fluid or air quality management, for instance filtration and ventilation systems to ensure clean fluid or air, free from pollutants, allergens, and excessive carbon dioxide.

Preferentially, the fluid, in particular the gas and more particularly the test air, stem from an independent air supply, which is, in particular, independent from the main air supply in the manufacturing plant, where the leak testing of the at least one part of the battery housing is carried out and where preferentially the battery housing is previously manufactured. The fluid with which the at least one part of the battery housing is pressurized and/or with which the cabin in filled may stem from a separate fluid storage tank within the manufacturing plant or within the cabin.

At least during leak testing, preferentially the at least one part of the battery housing, in particular the battery housing, and the surroundings of the at least one part of the battery housing, in particular the battery housing, and/or the fluid with which the climatized cabin is filled and/or with which the at least one part of the battery housing is pressurized, are kept at the same temperature. The temperature can be controlled and monitored via dedicated temperature sensors placed at or on the (at least one part of the) battery housing and/or the climatized cabin. It can be provided that the climatized cabin includes temperature monitoring of the fluid with which the cabin is filled and the (at least one part of the) battery housing. For this purpose, a control system can be provided.

Furthermore, it can be provided that the battery housing is transported in between the steps by a feeding transport system, in particular for introducing the (at least one part of the) battery housing into the climatized cabin and taking it out of the cabin again. During the transportation onto the feeding transport system, the temperature of the (at least one part of the) battery housing can be monitoring by measuring the temperature using several temperature sensors distributed along the feeding control system. Temperature monitoring and thus temperature sensors cannot only be provided for the (at least one part of the) battery housing, but also for (different positions within) the cabin and/or for the fluid with which the cabin is filled and the (at least one part of the) battery housing is pressurized with.

Within the climatized cabin, several parts of the same or different battery housings or several battery housings can be leak tested simultaneously. For this purpose, the climatized cabin can be equipped accordingly, i.e. several leak test stations can be provided within the climatized cabin.

According to the aforementioned method, the leak testing of the at least one part of the battery housing is based on pressurizing the at least one part of the battery housing with the fluid at a certain pressure p_{b} and measuring the pressure change Δp_{b}, preferentially during a defined testing period Δt. Thus, leak testing can for example be based on a pressure decay test or on a differential pressure leak test.

Generally, the testing period Δt may for example be between 30 s and 60 s, in particular 40 s. The duration of the testing period may for example be determined depending on the to be filled volume by the fluid and/or the leakage rate. The pressure to which the at least one part of the battery housing is pressurized for leak testing may for example be between 100 mbar and 200 mbar, in particular 150 mbar. The temperature, at which the fluid with which the at least one part of the battery housing may be pressurized, may be kept, preferentially within a tolerance range of up to two tenth of a degree Celsius at about 20 °C to 25 °C, in particular 23 °C, more particularly in the range of 21 °C to 25 °C. Preferentially, the temperature of the at least one part of the battery housing or the battery housing may be kept at about 25 °C during leak testing.

For a pressure decay test, leak testing of the at least one part of the battery housing may be initiated by introducing excess pressure into a cavity of the at least one part of the battery housing. It is also possible that with the help of an additional external element a cavity is formed around the at least one part of the battery housing. The pressure in the cavity may then be observed over a certain period of time, preferentially the defined testing period Δt. If a pressure drop exceeding a certain limit value is observed within this period, it can be concluded that the at least one part of the battery housing is leaking. The limit value may for example be a permissible leakage rate of in between 0.4 cm³/min and 0.8 cm³/min, in particular 0.6 cm³/min. Preferably, the leakage rate is aligned with the size of the cavity to be tested.

Carrying out the pressure decay leak test may include sealing the part to be leak-tested, i.e. the at least one part of the battery housing, previously, for instance securely sealing the at least one part in a test fixture to ensure that all potential leak paths are isolated. Then the at least one part may be connected to the test system, which may include a pressure source and pressure sensors. Following this, the at least one part may be filled with the fluid, such as air or another suitable gas, until it reaches the predetermined pressure level p_{b}. This may be done using a controlled pressure source.

During a following measurement phase, the pressure inside the at least one part may be monitored during the testing period Δt. One or more pressure sensors may record the pressure at regular intervals. Any decrease in pressure over time may be observed and may be indicative of a leak of the at least one part. The rate of pressure decay can be used to quantify the size of the leak.

When optionally carrying out more detailed data analysis, the data collected during the measurement phase may be analyzed to determine if the pressure drop exceeds acceptable limits. If the pressure drop is within acceptable limits, the part is considered leak-free. If not, the part is considered to have a leak.

In case of a differential pressure leak test, the pressure difference between a test part, i.e. the at least one part of the battery housing, and a reference part may be measured over time. The differential pressure method is based on the principle that a leak will cause a change in pressure within a substantially sealed part over time. By comparing the pressure in the test part to the reference part (which is known to be substantially leak-free or has a controlled leak rate), any pressure differential that develops indicates the presence and possibly the size of a leak.

Previous to carrying out the differential pressure leak test, the at least one part may be placed in a test chamber, such as the climatized cabin, and the chamber may be sealed. For the reference part, a reference chamber may be prepared similarly.

Following this, during pressurization, both chambers may be pressurized to the same initial pressure. The fluid used for pressurization can be air, nitrogen, or another suitable gas. Then, during the measurement phase, a differential pressure transducer may be used to monitor the pressure difference between the test and reference chambers over a specified time. A leak in the at least one part will cause a pressure drop in the test chamber, resulting in a pressure difference. The rate of pressure change can be used to calculate the leak rate. If the volume of the test chamber is known, the leak rate can be calculated using the change in pressure over time, along with the fluid properties.

Throughout the application, the term "at least one part of the battery housing" is used. Preferentially, the respective features described and including this term can be also understood as including the term "the battery housing", such that, for example, leak testing is carried out for the battery housing as such. Also, at least one part of the battery housing may be regarded as a certain area and/or a certain cavity arranged in the battery housing. Likewise, throughout the application, a fluid can preferentially be a gas, such as test air.

Generally, a control system may control the execution of the leak testing method and may be set up accordingly. The control system may be connected to or may be part of the device for leak testing described hereinafter.

According to a second aspect of the present invention, said problem is also solved by a device for leak testing at least one part of a battery housing, comprising: a first temperature sensor for sensing the temperature T₁ of the at least one part of the battery housing, a climatized cabin filled with a fluid at a certain pressure p_{c}, a fluid compressing unit for filling the at least one part of the battery housing with a fluid at a certain pressure p_{b}, and a pressure sensor for sensing the fluid pressure p_{b} of the at least one part of the battery housing. The pressure sensor can further be set up to measure the pressure change Δp_{b} during a defined testing period Δt.

For the described device for leak testing at least one part of the battery housing, the same technical effects and advantages as already described for the method for leak testing at least one part of a battery housing are applicable.

The temperature sensor for sensing the temperature T₁ of the at least one part of the battery housing may be positioned outside the climatized cabin for measuring the temperature of the (at least one part of the) battery housing before inserting the (at least one part of the) battery housing into the climatized cabin. Alternatively, the temperature sensor for sensing the temperature T₁ of the at least one part of the battery housing may be positioned inside the climatized cabin for measuring the temperature of the (at least one part of the) battery housing after inserting the (at least one part of the) battery housing into the climatized cabin.

The fluid compressing unit may act as a pressure source providing fluid, in particular gas, to pressurize the at least one part of the battery housing for the leak test. The pressure sensor of the device may be a high precision-sensor that measures the pressure inside the at least one part or a cavity formed around it accurately. Additional sensors may be included in the device. The climatized cabin may include an additional pressure or fluid source for filling the climatized cabin with the fluid, in particular with a gas such as air, at the certain pressure p_{c}.

Furthermore, the device may include a test fixture for holding and sealing the at least one part of the battery housing securely to prevent any external leaks, preferentially other potential leaks not belonging to the at least one part of the battery housing to be leak-tested. Moreover, the device may include a control system for managing the leak test process, recording data, and performing analysis. The control may be a computerized control for precision and ease of use. The control system may be set up to carry out the afore-described method and embodiments thereof.

Additionally, in particular for the purpose of carrying out differential pressure leak testing, the device may, besides the climatized cabin as a test chamber for enclosing the at least one part of the battery housing to be leak tested, include a reference chamber, for example a further climatized cabin, for containing a reference part or constituting an empty chamber with a known volume. Further, a differential pressure transducer for measuring the pressure difference between the two chambers or cabins may be provided.

According to a third aspect of the invention, there is disclosed the use of a device for leak testing at least one part of a battery housing, in particular the above-described device or an embodiment thereof, in a method for leak testing at least one part of a battery housing, in particular the above-described method or an embodiment thereof.

For the described use of a device for leak testing at least one part of the battery housing, the same technical effects and advantages as already described for the method and device for leak testing at least one part of a battery housing are applicable.

Further various preferred embodiments of the method for leak testing at least one part of a battery housing, the device for leak testing at least one part of a battery housing and the use of a device for leak testing in a method for leak testing at least one part of a battery housing are described below, wherein the various embodiments can be combined with one another and apply accordingly to embodiments of the method, the device and the use of the device.

According to a first exemplary embodiment of the method, during leak testing the at least one part of the battery housing, the temperature of the fluid with which the at least one part of the battery housing is pressurized and/or the temperature of the at least one part of the battery housing is monitored and the temperature change ΔT is recorded.

This way, the influence of temperature fluctuations on the measurement and in particular on the permissible leak rate can be evaluated. This helps identifying pseudo scrap and reduces the risk of not recognizing faulty parts. The monitoring of the temperature and the recording of the temperature change may be carried out at least during the testing period. Preferentially, in addition the temperature of the fluid in the cabin can be monitored.

According to a further exemplary embodiment of the method, the recorded temperature change ΔT of the fluid with which the at least one part of the battery housing is pressurized and/or with or the recorded temperature change ΔT of the at least one part of the battery housing is kept, preferentially within a tolerance range of up to two tenth of a degree Celsius, at about 20 °C to 25 °C, in particular 23 °C, more particularly in the range of 21 °C to 25°C during the testing period Δt. This way temperature fluctuations and thus the temperature influence onto the measurement results of the leak test can be minimized.

According to a further exemplary embodiment of the method, the method further comprises the steps of: additionally measuring the temperature T₂ of the at least one part of the battery housing before introducing the at least one part of the battery housing into the climatized cabin, optionally after (air-)cooling the at least one part of the battery housing, and/or measuring the temperature T₃ of the at least one part of the battery housing after introducing the at least one part of the battery housing into the climatized cabin and before leak testing the at least one part of the battery housing.

This way, further temperature check points can be provided to more closely monitor the temperature of the at least one part of the battery housing. By measuring the temperature T₂ of the at least one part of the battery housing before introducing the at least one part of the battery housing into the climatized cabin, optionally after cooling the at least one part of the battery housing, the effect of the optional (air-)cooling can be monitored. In particular it can be controlled, if the air-cooling has led to the desired results, i.e. cooling the at least one part of the battery housing to the desired temperature, in particular about 25 °C. By measuring the temperature T₃ of the at least one part of the battery housing after introducing the at least one part of the battery housing into the climatized cabin and before leak testing the at least one part of the battery housing, it can be checked, that within the climatized cabin the at least one part of the battery housing is at the desired temperature, in particular 25 °C, before leak testing takes place.

According to a further exemplary embodiment of the method, the certain pressure p_{c} of the fluid with which the climatized cabin is filled is an over-pressure relative to the ambient atmosphere surrounding the cabin. This way contamination of the fluid, in particular the gas such as air, in the climatized cabin can be suppressed or at least minimized. This is because thanks to the over-pressure, contamination such as dirt particles of the ambient atmosphere are prevented from entering the climatized cabin.

The ambient atmosphere may refer to the ambient air surrounding the climatized cabin.

According to a further exemplary embodiment of the method, the fluid with which the at least on part of the battery housing is pressurized is taken from a storage tank within the climatized cabin. This helps ensuring the quality of the fluid, in particular the gas, with which the at least one part of the battery is pressurized. The storage tank may be connected to a fluid compressing unit for filling the at least one part of the battery housing with the fluid at a certain pressure p_{b}. The fluid compressing unit may be part of a leak test station. The climatized cabin may additionally be connected to a further pre-storage tank for fluid, with which the climatized cabin is filled.

According to a further exemplary embodiment of the method, the fluid with which the at least one part of the battery housing is pressurized is class 1 test air. In this way, the testing conditions can be especially well defined leading to more accurate test results. Quality class 1 test air refers to a standard of compressed air quality as defined by the ISO 8573-1 standard, which specifies the purity classes of compressed air in terms of particulate matter, water content, and oil content. Quality class 1 air is characterized in particular by the fact that the air is extremely dry, with minimal water vapor content, and extremely clean. Moreover, preferentially, the fluid, in particular the gas and more particularly the test air, is kept at a defined constant temperature.

According to a further exemplary embodiment of the method, before leak testing the at least one part of the battery housing, the at least one part of the battery housing is left in the climatized cabin to equilibrate during a stabilization phase.

Thus, in particular after pressurization, there may follow a stabilization period. During this time, the pressure may be allowed to equalize within the at least one part, and any temperature-related pressure changes may be allowed to settle. Hence the stabilization phase enables to reach equilibrium of pressure and temperature as well as material adjustment. Preferentially, the at least one part of the battery housing is left in the climatized cabin to equilibrate during a stabilization phase for about 10 s to 50 s, in particular 20 s to 40s, more particularly 30 s.

The stabilization phase may be in particular useful to help minimize the effects of adiabatic heating of the fluid with which the at least one part of the battery housing is pressurized leading to a significant temperature increase of the fluid. Adiabatic heating is a process in which the temperature of a fluid such as a gas increases due to compression without any heat exchange with the surroundings. This happens because the work done on the gas to compress it increases its internal energy, which in turn raises its temperature. In an adiabatic process, the heat transfer is substantially zero, and the temperature change is substantially solely due to the work done on or by the gas.

During the stabilization phase, the heat generated from adiabatic compression may dissipate, and the fluid temperature, in particular the gas temperature, may gradually return to equilibrium with its surroundings. This way, inaccurate leak test results may be minimized. Further, as the fluid, in particular the gas, cools down and reaches thermal equilibrium with the surroundings, the pressure inside the system will also stabilize. Thus, the stabilization phase may ensure that the pressure drop observed during the leak test is due to actual leaks and not due to temperature-induced pressure changes.

As a consequence, thanks to the stabilization phase, thermal and pressure equilibrium can be achieved and any subsequent changes in pressure can be attributed to leaks in the system.

According to a further exemplary embodiment of the method, the at least one part of the battery housing to be leak tested is vacuum-dried before leak testing.

According to a further exemplary embodiment of the device, the device further comprises a vacuum dryer for vacuum drying the at least one part of the battery housing.

This way, the impact on moisture on leak test results leading to falsified test results due to the capillary effect can be minimized.

This is because, for a humid part where fluid such as water is present, the capillary effect can cause water to penetrate the pores of the part leading to an increase in mass and therefore the measured density of the part. The measured density of a damp part is therefore higher than that of a dry component. Moisture present in the pores of the part can significantly affect the capillary action. If the part is moist, the presence of water in the pores can lead to an initial pressure drop when the part is pressurized during leak testing. This is because the pressurized gas may push the water deeper into the pores or displace it, causing a temporary drop in pressure. Thus, due to the capillary effect, moisture can lead to false positives in leak detection. The displacement of water in the pores by the pressurized fluid, in particular gas, may mimic the pressure drop associated with leaks. Conversely, if water completely fills a pore, it might temporarily seal a small leak, leading to a false negative.

To mitigate the impact of moisture, it can thus be provided that the at least one part is dried before leak testing. This can involve using heat, vacuum drying, or other methods to ensure that the pores and cracks of the at least one part are free of water.

According to a further exemplary embodiment of the device, the device further comprises an (air-)cooling unit for (air-)cooling the at least one part of the battery housing. This way the influence of the temperature and in particular that of temperature changes of the at least one part of the battery housing on the leak test results can be minimized.

In particular according to this embodiment, the temperature sensor for sensing the temperature T₁ of the at least one part of the battery housing may be positioned outside the climatize cabin for measuring the temperature of the (at least one part of the) battery housing before (air-) cooling the (at least one part of the) battery housing and before inserting the (at least one part of the) battery housing into the climatized cabin.

According to a further exemplary embodiment of the device, the device further comprises a further temperature sensor positioned outside the climatized cabin, and/or the device further comprises a temperature sensor positioned inside the climatized cabin.

This way, further temperature control positions can be provided to more accurately control the temperature of the at least one part of the battery housing and thus to more accurately determine the temperature influence on the leak test results. This helps minimizing the influence of temperature fluctuations on the leak test results.

Furthermore, the first temperature sensor may be positioned outside the climatized cabin for measuring the temperature T₁ of the at least one part of the battery housing before introducing the at least one part of the battery housing into the climatized cabin.

The optional further temperature sensor positioned outside the climatized cabin may be employed for measuring the temperature T₂ of the at least one part of the battery housing before introducing the at least one part of the battery housing into the climatized cabin, optionally after (air-)cooling the at least one part of the battery housing, and may be referred to as second temperature sensor.

The optional temperature sensor positioned inside the climatized cabin may be employed for measuring the temperature T₃ of the at least one part of the battery housing after introducing the at least one part of the battery housing into the climatized cabin and before leak testing the at least one part of the battery housing, and may be referred to as third temperature sensor.

According to a further exemplary embodiment, the device further comprises a feeding transport system for transporting the battery housing into the climatized cabin. This way leak testing can be easily implemented in the manufacturing plant after the actual manufacturing process of the battery housing.

In particular, the feeding transport system may transport the battery housing between the optionally provided several temperature sensors and/or may transport the battery housing out of the climatized cabin after leak testing. Further, the feeding transport system may transport the battery housing through the climatized cabin.

According to a further exemplary embodiment, the device further comprises at least one airlock at the climatized cabin. Air locks at the climatized cabin can be beneficial for inserting the battery housing into the climatized cabin without influencing the controlled atmosphere inside the climatized cabin. The same is true for taking the battery housing out of the climatized cabin through an airlock after leak testing. Thus, in particular, there may be at least one airlock provided at one end of the climatized cabin to insert the battery housing through the airlock into the climatized cabin and/or at least one airlock at another end of the climatized cabin to take the battery housing out of the climatized cabin.

Further advantageous exemplary embodiments of the invention are indicated by the following detailed description of a number of practical examples of the present invention, in particular in connection with the figures.

The figures attached to the application, however, are only intended to be used for the purpose of clarification, and not to determine the scope of protection of the invention. The attached drawings are intended only as examples reflecting the general concept of the present invention. In particular, features shown in the figures should not in any way be considered an essential component part of the invention.

In the following, the invention will be described in more detail with reference to the figures.
- Fig. 1: shows an exemplary embodiment of a device for leak testing at least one part of a battery housing, and
- Fig. 2: shows an exemplary embodiment of a battery housing.

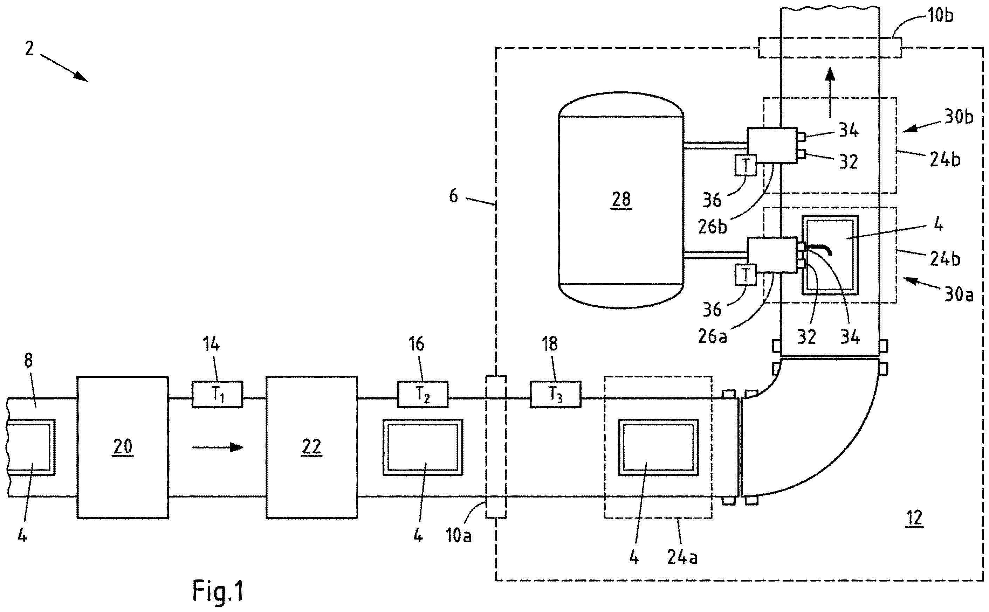

Fig. 1 depicts an exemplary embodiment of a device 2 for leak testing at least one part of a battery housing 4. The device comprises a climatized cabin 6 and a feeding transport system 8 for transporting the battery housing 4 into the climatized cabin 6. The transport direction is indicated with arrows on the feeding transport system 8 in the figure.

Airlocks 10a, 10b are provided at two different ends of the climatized cabin 6 for inserting and exerting the battery housing 4 into and out of the cabin 6 without influencing the controlled atmosphere inside the climatized cabin 6. The climatized cabin 6 is filled with a fluid at a certain pressure p_{c}, in this case with air 12, at controlled conditions such as a controlled temperature, a controlled pressure and a controlled air quality. For instance, the temperature within the cabin 6 can be kept at 23 °C ± 2 °C and a slight over-pressure compared to the ambient atmosphere of the cabin 6 can be maintained.

Alongside the feeding transport system 8 temperature sensors 14, 16, 18 for measuring the temperature T₁, T₂, T₃ of the battery housing 4 are foreseen. Whereas temperature sensors 14, 16 are placed outside the climatized cabin 6, temperature sensor 18 is placed inside the climatized cabin 6 behind the airlock 10a for inserting the battery housing 4 into the cabin 6.

Further, outside the cabin 6 and alongside the transport feeding system 8 a vacuum dryer 20 and an air-cooling unit 22 for air-cooling the battery housing 4 are provided. The temperature sensor 14 for measuring the temperature T₁ of the battery housing 4 is placed after the vacuum dryer 20 and before the air-cooling unit 22. Based on the sensed temperature T₁, air-cooling of the battery housing 4 can optionally be employed. If, for example, the temperature T₁ of the battery housing 4 exceeds 25 °C, for example is at 35 °C, the air-cooling unit 22 can be programmed to cool down the battery housing 4 to a temperature of about 25 °C. The temperature T₂ of the battery housing 4 after the optional air-cooling can be sensed and thus checked by the temperature sensor 16 placed behind the air-cooling unit 22.

After inserting the battery housing 4 into the cabin 6 through the airlock 10a, the temperature sensor 18 can check again the temperature T₃ of the battery housing. Next, the battery housing 4 can be left in a stabilization zone 24a to equilibrate with the conditions and the air 12 in the cabin 6 during a stabilization phase. A further stabilization zone 24b is foreseen at the location where the leak testing of the at least one part of the battery housing 4 is carried out. Here during a stabilization phase, in particular after pressurizing the at least one part of the battery housing 4, the battery housing 4 can equilibrate before the actual leak testing takes place and the pressure change Δp_{b}, preferentially during a defined testing period Δt, is measured.

The climatized cabin 6 further contains at least one, here two, fluid compressing units 26a, 26b for filling the respective parts of the respective battery housing 4 with a fluid, in particular a gas, at a certain pressure p_{b} for leak testing. Thus, in the shown example in Fig. 1, two leak test stations 30a, 30b for simultaneously leak testing two battery housings 4 are shown. Obviously, the device 2 can contain more than the two shown leak test stations 30a, 30b. The fluid compressing units 26a, 26b are each connected to a storage tank 28 within the climatized cabin 6. The fluid with which the battery housings 4 are pressurized respectively for leak testing is taken from the storage tank 28. Here, the storage tank 28 contains quality class 1 test air.

The fluid compressing units 26a, 26b at the test stations 30a, 30b further each include a pressure sensor 32 for sensing the fluid pressure p_{b} of the of the (at least one part of the) battery housing, in particular during leak testing. This pressure sensor 32 is a crucial part of the leak test and delivers the measurement results which can be analyzed to detect leaks of the (at least one part of the) battery housing 4. Besides the pressure sensor 32, a fluid compressing unit 26a, 26b further includes a connection such as a pipe 34 which can be used for pressurizing (the at least one part of) the battery housing 4. Moreover, a temperature sensor 36 can be foreseen to sense the temperature of the (at least one part of the) battery housing 4 before, during and/or after leak testing.

With the temperature sensor 36, during leak testing the at least one part of the battery housing 4, the temperature of the fluid with which the at least one part of the battery housing 4 is pressurized and/or the temperature of the at least one part of the battery housing 4 can be monitored and the temperature change ΔT recorded.

A control system (not shown) for controlling the leak test, the conditions in the climatized cabin 6, including the storage tank 28, and/or the test stations 26a, 26b can be foreseen. With the help of the control system, the recorded temperature change ΔT of the fluid with which the at least one part of the battery housing 4 is pressurized and/or the at least one part of the battery housing 4, which can be recorded thanks to the temperature sensor 36, can be kept, preferably within a tolerance range of up to two tenth of a degree Celsius, at about 20 °C to 25 °C, in particular 23 °C, more particularly in the range of 21 °C to 25 °C, during the testing period Δt. The control system can further be set up to control the vacuum dryer 20 and the air-cooling unit 22 as well as the airlocks 10a, 10b and the feeding transport system 8.

Prior to leak testing at a leak test station 30a, 30b, and preferentially after pressurization to the pressure p_{b}, the battery housing 4 can be left to equilibrate in the stabilization zone 24b within the cabin 6 during a stabilization phase. This stabilization phase can take for example 20 s to 40 s. The effect of adiabatic heating on the measurement results can thus be minimized.

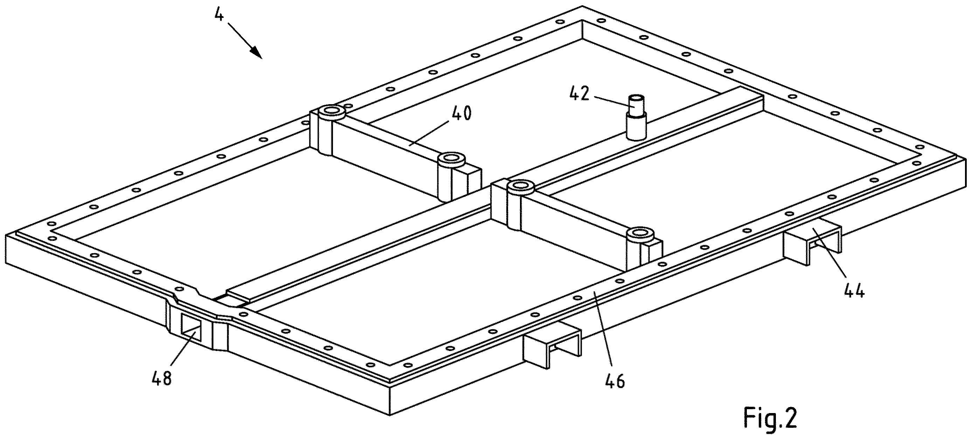

Fig. 2 shows an exemplary embodiment of a battery housing 4 with different locations or examples 40, 42, 44, 46, 48 for leak testing different parts of the battery housing 4 within the scope of the method for leak testing or embodiments thereof described in this application. The locations 40, 42, 44, 46, 48 can be leak tested with the device for leak testing or embodiments thereof described in this application, in particular with the device 2 according to Fig. 1.

At location 40, elements, such as side walls, crucial for the integrity, in particular the stability, of the battery housing 4 are indicated. Ensuring these elements are properly sealed and do not allow any leakage is crucial for the safety of the device, for example an electric vehicle, in which the battery housing 4 is implemented. Leak tests carried out at location 40 may be referred to as breakthrough leak tests. The described integrity elements can for example be leak tested by pressurizing a cavity enclosed (at least partly) by the integrity element or elements and analyzing the pressure evolution within the cavity.

At location 42, a structural component used to provide additional mechanical stability and strength to the battery housing 4, such as a tie rod or tension rod, is indicated. The structural integrity of this structural component helps ensuring the seal integrity of the battery housing 4, which is why leak testing of such a structural component 42 is also crucial. The structural component can for example be leak tested by pressurizing a cavity enclosed (at least partly) by the structural component and analyzing the pressure evolution within the cavity.

At location 44, a casting or potting material used to seal components or interfaces within the battery housing 4 is indicated. A method used to check for leaks of these sealings by utilizing a sealing compound or adhesive may be referred to as casted glue test. The casted glue test is in particular designed to ensure that the adhesive or sealing compound used in the battery housing 4 effectively seals all potential leakage paths and helps ensuring the integrity of the battery housing 4 against environmental ingress. The used casting or potting material for sealing components or interfaces can be tested by pressurizing the battery housing 4 or parts thereof and detecting if the pressure drops indicating a failing glue line or seal.

At location 46, a possible location for an outer glue line test is indicated. This test is a specific leak testing method used to evaluate the integrity of adhesive joints or sealants applied on the external surfaces of the battery housing 4 and ensures that the glue lines or seals on the outer part of the battery housing 4 are free from defects and can effectively prevent leaks. The glue lines or seals can be tested by pressurizing the battery housing 4 or parts thereof and detecting if the pressure drops indicating a failing glue line or seal.

Eventually, at location 48, a possible location for leak testing and thus checking the integrity if the cooling system, specifically the cell coolers, to ensure that there are no leaks in the cooling circuits. For this purpose, the cooling system (cell coolers) can be connected at a test station 30a, 30b to a fluid compressing unit 26a 26b.

## Claims

1. Method for leak testing at least one part of a battery housing (4), comprising the steps of:
- measuring the temperature T₁ of the at least one part of the battery housing (4),
- optionally cooling the at least one part of the battery housing (4),
- introducing the at least one part of the battery housing (4) into a climatized cabin (6) filled with a fluid (12) at a certain pressure p_{c}, and
- leak testing the at least one part of the battery housing (4) based on pressurizing the at least one part of the battery housing (4) with a fluid at a certain pressure p_{b} and measuring the pressure change Δp_{b}, preferentially during a defined testing period Δt.

2. Method according to claim 1,
**characterized in that**,
- during leak testing the at least one part of the battery housing (4), the temperature of the fluid with which the at least one part of the battery housing (4) is pressurized and/or the temperature of the at least one part of the battery housing (4) is monitored and the temperature change ΔT is recorded.

3. Method according to claim 2,
**characterized in that**,
- the recorded temperature change ΔT of the fluid with which the at least one part of the battery housing (4) is pressurized and/or the recorded temperature change ΔT of the at least one part of the battery housing (4) is kept within a tolerance range of up to two tenth of a degree Celsius, preferentially at about 20 °C to 25 °C, in particular 23 °C, more particularly in the range of 21 °C to 25 °C, during the testing period Δt.

4. Method according to any of claims 1 to 3,
further comprising the steps of:
- additionally measuring the temperature T₂ of the at least one part of the battery housing (4) before introducing the at least one part of the battery housing (4) into the climatized cabin (6), optionally after air-cooling the at least one part of the battery housing (4), and/or
- measuring the temperature T₃ of the at least one part of the battery housing (4) after introducing the at least one part of the battery housing (4) into the climatized cabin (6) and before leak testing the at least one part of the battery housing (4).

5. Method according to any of claims 1 to 4,
**characterized in that**,
- the certain pressure p_{c} of the fluid (12) with which the climatized cabin (6) is filled is an over-pressure relative to the ambient atmosphere surrounding the cabin (6).

6. Method according to any of claims 1 to 5,
**characterized in that**,
- the fluid with which the at least on part of the battery housing is pressurized is taken from a storage tank (28) within the climatized cabin (6).

7. Method according to any of claims 1 to 6,
**characterized in that**,
- the fluid with which the at least one part of the battery housing (4) is pressurized is class 1 test air.

8. Method according to any of claims 1 to 7,
**characterized in that**,
- before leak testing the at least one part of the battery housing (4), the at least one part of the battery housing (4) is left in the climatized cabin (6) to equilibrate during a stabilization phase.

9. Method according to any of claims 1 to 8,
**characterized in that**,
- the at least one part of the battery housing (4) to be leak tested is vacuum-dried before leak testing.

10. Device (2) for leak testing at least one part of a battery housing (4), comprising:
- a first temperature sensor (14) for sensing the temperature T₁ of the at least one part of the battery housing (4),
- a climatized cabin (6) filled with a fluid (12) at a certain pressure p_{c},
- a fluid compressing unit (26a, 26b) for filling the at least one part of the battery housing (4) with a fluid at a certain pressure p_{b}, and
- a pressure sensor (32) for sensing the fluid pressure p_{b} of the at least one part of the battery housing (4).

11. Device (2) according to claim 10,
- further comprising an air-cooling unit (22) for air-cooling the at least one part of the battery housing (4).

12. Device (2) according to claim 10 or 11,
**characterized in that**,
- the device (2) further comprises a further temperature sensor (16) positioned outside the climatized cabin (6), and/or
- the device (2) further comprises a temperature sensor (18) positioned inside the climatized cabin (6).

13. Device (2) according to one of claims 10 to 12,
- further comprising a feeding transport system (8) for transporting the battery housing (4) into the climatized cabin (6).

14. Device (2) according to one of claims 10 to 13,
- further comprising at least one airlock (10a, 10b) at the climatized cabin (6).

15. Device (2) according to one of claims 10 to 14,
- further comprising a vacuum dryer (20) for vacuum drying the at least one part of the battery housing (4).

## Amended claims

### Amended claims in accordance with Rule 137(2) EPC.

1. Method for leak testing at least one part of a battery housing (4), comprising the steps of:
- measuring the temperature T₁ of the at least one part of the battery housing (4),
- optionally cooling the at least one part of the battery housing (4),
- introducing the at least one part of the battery housing (4) into a climatized cabin (6) filled with a fluid (12) at a certain pressure p_{c}, and
- leak testing the at least one part of the battery housing (4) based on pressurizing the at least one part of the battery housing (4) with a fluid at a certain pressure p_{b} and measuring the pressure change Δp_{b}, preferentially during a defined testing period Δt,
- wherein the battery housing (4) comprises several square meters of size; and
- wherein the optional cooling of the at least one battery housing (4) depends on the measured temperature T₁ of the at least one part of the battery housing (4).

2. Method according to claim 1,
**characterized in that**,
- during leak testing the at least one part of the battery housing (4), the temperature of the fluid with which the at least one part of the battery housing (4) is pressurized and/or the temperature of the at least one part of the battery housing (4) is monitored and the temperature change ΔT is recorded.

3. Method according to claim 2,
**characterized in that**,
- the recorded temperature change ΔT of the fluid with which the at least one part of the battery housing (4) is pressurized and/or the recorded temperature change ΔT of the at least one part of the battery housing (4) is kept within a tolerance range of up to two tenth of a degree Celsius, preferentially at about 20 °C to 25 °C, in particular 23 °C, more particularly in the range of 21 °C to 25 °C, during the testing period Δt.

4. Method according to any of claims 1 to 3,
further comprising the steps of:
- additionally measuring the temperature T₂ of the at least one part of the battery housing (4) before introducing the at least one part of the battery housing (4) into the climatized cabin (6), optionally after air-cooling the at least one part of the battery housing (4), and/or
- measuring the temperature T₃ of the at least one part of the battery housing (4) after introducing the at least one part of the battery housing (4) into the climatized cabin (6) and before leak testing the at least one part of the battery housing (4).

5. Method according to any of claims 1 to 4,
**characterized in that**,
- the certain pressure p_{c} of the fluid (12) with which the climatized cabin (6) is filled is an over-pressure relative to the ambient atmosphere surrounding the cabin (6).

6. Method according to any of claims 1 to 5,
**characterized in that**,
- the fluid with which the at least on part of the battery housing is pressurized is taken from a storage tank (28) within the climatized cabin (6).

7. Method according to any of claims 1 to 6,
**characterized in that**,
- the fluid with which the at least one part of the battery housing (4) is pressurized is class 1 test air.

8. Method according to any of claims 1 to 7,
**characterized in that**,
- before leak testing the at least one part of the battery housing (4), the at least one part of the battery housing (4) is left in the climatized cabin (6) to equilibrate during a stabilization phase.

9. Method according to any of claims 1 to 8,
**characterized in that**,
- the at least one part of the battery housing (4) to be leak tested is vacuum-dried before leak testing.

10. Device (2) for leak testing at least one part of a battery housing (4), comprising:
- a first temperature sensor (14) for sensing the temperature T₁ of the at least one part of the battery housing (4),
- a climatized cabin (6) filled with a fluid (12) at a certain pressure p_{c},
- a fluid compressing unit (26a, 26b) for filling the at least one part of the battery housing (4) with a fluid at a certain pressure p_{b}, and
- a pressure sensor (32) for sensing the fluid pressure p_{b} of the at least one part of the battery housing (4),
- further comprising an air-cooling unit (22) for optionally air-cooling the at least one part of the battery housing (4),
- wherein the battery housing (4) comprises several square meters of size; and
- wherein the optional cooling of the at least one battery housing (4) depends on the measured temperature T₁ of the at least one part of the battery housing (4).

11. Device (2) according to claim 10,
**characterized in that**,
- the device (2) further comprises a further temperature sensor (16) positioned outside the climatized cabin (6), and/or
- the device (2) further comprises a temperature sensor (18) positioned inside the climatized cabin (6).

12. Device (2) according to claim 10 or 11,
- further comprising a feeding transport system (8) for transporting the battery housing (4) into the climatized cabin (6).

13. Device (2) according to one of claims 10 to 12,
- further comprising at least one airlock (10a, 10b) at the climatized cabin (6).

14. Device (2) according to one of claims 10 to 13,
- further comprising a vacuum dryer (20) for vacuum drying the at least one part of the battery housing (4).
